Europäisches Patentamt

European Patent Office

Office européen des brevets

(11) Numéro de publication: **0 389 328 B1**

(12) **FASCICULE DE BREVET EUROPEEN**

(45) Date de publication du fascicule du brevet: **06.09.95**

(51) Int. Cl.6: **B09B 3/00**, C04B 18/10, C02F 11/00

(21) Numéro de dépôt: **90400641.8**

(22) Date de dépôt: **12.03.90**

Le dossier contient des informations techniques présentées postérieurement au dépôt de la demande et ne figurant pas dans le présent fascicule.

(54) **Procédé pour l'insolubilisation et l'agglomération de cendres volantes d'incinération.**

(30) Priorité: **20.03.89 FR 8903586**

(43) Date de publication de la demande:
**26.09.90 Bulletin 90/39**

(45) Mention de la délivrance du brevet:
**06.09.95 Bulletin 95/36**

(84) Etats contractants désignés:
**BE CH DE DK ES GB GR IT LI LU NL SE**

(56) Documents cités:
**DE-A- 3 436 085
DE-A- 3 641 786
US-A- 4 432 666
US-A- 4 472 198**

**CHEMICAL ABSTRACTS, vol. 105, no. 26, décembre 1986, seite 299, résumé no. 231526d, Columbus, Ohio, US; & JP-A-61 133 186 (M. WAKIMURA) 20-06-1986**

(73) Titulaire: **Pichat, Philippe
18, rue des Tournelles
F-75008 Paris (FR)**

(72) Inventeur: **Pichat, Philippe
18, rue des Tournelles
F-75008 Paris (FR)**

(74) Mandataire: **Schmit, Christian Norbert Marie et al
Cabinet Ballot-Schmit
7, rue Le Sueur
F-75116 Paris (FR)**

Rank Xerox (UK) Business Services
(3.10/3.09/3.3.3)

## Description

La présente invention a trait au domaine du traitement de déchets en vue de les insolubiliser et de les transformer en masses compactes piègeant les éléments et produits toxiques, dont notamment des métaux. Elle s'applique tout spécialement au cas des cendres volantes d'incinération.

On sait que les cendres volantes d'incinération (appelées ci-après CV pour abréger) résultent de la combustion de toutes sortes de déchets. Un incinérateur produit, outre du mâchefer et des déchets d'épuration de fumées, une grande quantité de CV sous forme de fines particules que l'on piège, généralement, par des moyens électrostatiques. La composition des CV varie, bien entendu, en fonction des types de déchets, des équipements utilisés et des conditions d'exploitation. Dans le cas, par exemple, de l'incinération d'ordures ménagères, la composition d'une CV est approximativement la suivante : Si : 23% ; Al : 7% ; Fe : 4% ; Pb : 1% ; Zn : 1,9% ; Ca : 8% ; Mg : 2,5 % ; Ba : 0,3% ; K : 4% ; Na : 3% ; Ti : 0,7% ; Cd : 0,03% ; Sn : 0,3% ; Cr : 0,1% ; Cl : 1% ; S : 3% ; Na : 3% ; N : 4% ; P : 5% ; C organique : environ : 1% des imbrûlés.

Les CV qui sont stockées en milieu humide peuvent provoquer par lixiviation des pollutions sensibles. C'est ainsi, par exemple, qu'un échantillon représentatif de pH 6,8 environ, soumis à la norme DIN 38414 relargue par lixiviation les éléments toxiques suivants (quantités en parties par million p.p.m.) : pb : 6,3 ; Cu : 0,2 ; Cd : 60 ; Zn : 900 ; Fe : 0,2

Le document US-A-4,472,198 décrit un procédé de traitement de cendres volantes dans lequel lesdites cendres sont mélangées avec 5 à 25 % en poids d'eau, le mélange obtenu étant ensuite compacté. Grâce à ce procédé, on obtient un produit ressemblant à de la terre.

Par ailleurs, un certain nombre de procédés on été proposés pour insolubiliser les cendres volantes d'incinération, par exemple en leur ajoutant de la chaux en quantités importantes, ou encore du ciment ou des mélanges de ciment et de silicate de sodium. Les compositions obtenues, par de tels traitements, sont très basiques (pH supérieur généralement à 12) et ont tendance à solubiliser des éléments tels que notamment le plomb et le zinc. Un autre inconvénient peut survenir, à savoir la production intempestive d'hydrogène selon la réaction :

$$OH^- + H_2O + Al \rightarrow AlO_2^- + 3/2\ H_2$$

Dans le but d'obvier à ces inconvénients dus en grande partie à la forte basicité des CV traitées, le demandeur a effectué de nombreuses expérimentations destinées à transformer les CV en produits pratiquement insolubles dans l'eau et faciles à agglomérer en masses inertes, non toxiques, ou encore aptes à être utilisés dans des bétons.

Il a tout d'abord été trouvé, de façon surprenante, que l'on pouvait obtenir des produits présentant les caractéristiques susvisées en additionnant à la CV une faible quantité d'eau de façon à obtenir un mortier ou une pâte, ou mieux, une masse simplement humectée d'eau de façon homogène.

Pour parvenir à un humectage convenable, on peut opérer en malaxeur ou sur une bande transporteuse où circule la CV, sur laquelle on asperge au moins une partie de l'eau nécessaire. Cette quantité d'eau peut varier généralement entre les limites de 10 à 35 % du poids de la CV mais elle s'avère souvent voisine de 10 à 18 %.

Conformément à une intéressante mise en oeuvre du procédé de l'invention, au lieu d'utiliser, de l'eau ordinaire. on peut employer une eau non épurée comme par exemple : une eau de surface ou souterraine, une eau résiduaire, une boue de station d'épuration des eaux ou encore des lessivats de décharge.

Après traitement dans les conditions précitées, le mélange obtenu n'émet plus de poussières et il est compacté soigneusement sous forme de parpaings ou autres ou encore par un des engins utilisés dans les travaux publiques. Selon une variante, on peut aussi extruder de tels mélanges.

Il a pu être constaté, lors de ces opérations d'humectage de la CV et par diverses analyses -notamment par diffraction aux rayons X- que l'eau ajoutée à la CV se comportait comme un véritable réactif, avec formation, notamment de gehlenite de formule : $(CaO)_2\ Al_2O_3,\ SiO_2,\ 8H_2O$, et d'aluminate $(CaO)_4,\ Al_2O_3,\ 13\ H_2O$,l'eau additionnée devenant en partie de l'eau de constitution de ces produits.

Les résultants d'expérimentation, résumés dans le tableau 1 ci-après, montrent que la lixiviation, selon la norme DIN 38414, pour une CV de pH environ 7,6 traitée selon l'invention, est considérablement diminuée :

EP 0 389 328 B1

## Tableau 1

| Métaux | Pb | Cu | Cd | Zn | Fe | Rapport $\frac{Eau}{CV}$ |
|---|---|---|---|---|---|---|
| avant traitement | 6.3 | 0,2 | 60 | 900 | 0,2 | 0 |
| après traitement | . 0,4 | < 0,1 | | 1,5 | 0,1 | 0,30 |
| | 0,35 | < 0,1 | | 0,1 | 0,1 | 0,15 |

Les valeurs indiquées ci-dessus sont exprimées en ppm de métaux.

Comme on peut le constater, un rapport eau/CV faible favorise la fixation des éléments polluants. Ce rapport correspond en général à un minimum de 0,13 à 0,14 mais il peut encore être légèrement abaissé par l'utilisation d'agents fluidifiants tels que par exemple des lignosulfonates.

Il a en outre été trouvé que, dans le cas assez fréquent, où l'on a affaire à des CV acides les résultats après lixiviation ainsi que la propension à obtenir des masses dures de déchets étaient encore améliorés lorsqu'on ajoute à l'eau une petite quantité de chaux de façon à obtenir un pH maximum de 11,6 environ. En outre, la chaux peut être additionnée d'un produit à base de silice et/ou d'alumine.

Les exemples ci-dessous illustrent ces divers perfectionnements selon l'invention.

Addition de chaux

a) On a ajouté à 158 kg de CV d'ordures ménagères 30 kg d'eau dans laquelle on avait dispersé 0,03 kg de chaux vive (CaO) soit 0,1 %. Après compactage, on a obtenu un matériau de très bonne cohésion et pour lequel les résultants de lixiviation étaient les suivants :

| pH | Pb | Cu | Cd | Zn | Fe | Eau/CV |
|---|---|---|---|---|---|---|
| 9 | <0,4 | <0,1 | 0,5 | 0,2 | 0,1 | 0,19 |

b) On a ajouté à 133,3 kg de CV d'ordures ménagères 30 kg d'eau dans laquelle on avait dispersé 0,183 kg de Cao soit 0,137 %. Après compactage du mélange on a obtenu un matériau de cohésion supérieure à celle du produit selon l'essai a) ci-dessus, la lixiviation étant en outre un peu plus faible, par exemple dans le cas du cadmium.

| pH initial | Pb | Cu | Cd | Zn | Fe | Eau/CV |
|---|---|---|---|---|---|---|
| 11,5 | <0,4 | <0,1 | 0,1 | 0,1 | 0,1 | 0,22 |

La résistance à la compression de matériau, après 20 jours, atteignait 7 mégaPascal (MPa).

c) Dans cet exemple, la chaux apportée provenait d'un déchet d'épuration de fumées d'incinération (DEF).

A 180 kg de CV d'ordures ménagères on a ajouté 50 kg d'eau dans laquelle on a dispersé 7 kg DEF (contenant environ 30,5 % de chaux dont une partie sous forme carbonatée). On a obtenu un matériau d'aussi bonne cohésion que dans l'exemple b) ci-dessus et avec des résultats suivants pour la lixiviation (éléments toujours exprimés en ppm).

| pH initial | Pb | Cu | Cd | Zn | Fe | Al | Eau/CV + DEF |
|---|---|---|---|---|---|---|---|
| 7,6 | 0,3 | <0,1 | 0,15 | 0,04 | <0,1 | 1,5 | 0,267 |

Addition d'une source de chaux et de silice

On a ajouté à 100 kg de CV d'ordures ménagères 2 kg de CaO et 3 kg de CV de charbon (à titre de source de silice), ces deux derniers produits étant dispersés dans 30 kg d'eau. Les résultats après lixiviation, étaient très bons comme on peut le voir ci-dessous :

| pH initial | Pb | Cu | Cd | Zn | Fe | Al | Eau/CV + CaO + CV de charbon |
|---|---|---|---|---|---|---|---|
| 10,3 | 0,1 | <0,1 | <0,1 | <0,1 | <0,1 | 1 | 0,285 |

Addition d'une source de chaux et d'alumine

On a ajouté à 158 kg de CV d'ordures ménagères 30 kg d'eau résiduaire de station d'épuration où l'on avait dispersé 8 kg de ciment alumineux contenant 38 % de CaO et 39 % d'$Al_2O3$. Après compactage, le matériau avait une bonne cohésion et une excellente résistance à la compression. Les résultats après lixiviation sont résumés ci-dessous :

| pH initial | Pb | Cu | Cd | Zn | Fe | Eau/CV + autres |
|---|---|---|---|---|---|---|
| 9 | 0,4 | 0,1 | <0,1 | 0,1 | 0,1 | 0,18 |

En pratique, l'addition de chaux correspond à une fourchette d'environ 0,05 à 2 parties en poids pour 100 parties en poids de CV à traiter.

Comme on a pu le voir d'après les exemples ci-dessus, la chaux peut être constituée par de la chaux vive ou éteinte ou encore par toute autre source de chaux telle que : ciment alumineux, résidus de fabrication d'acétylène, etc... La silice ajoutée peut être de la silice fossile (terre à diatomées), silice broyée, argile, cendre volante de charbon, pouzzolane broyée, déchets d'amiante, résidus de fabrication de ferrosiliciums etc.. Quant aux sources d'alumine elles peuvent également être diverses, comme par exemple, outre des ciments alumineux, les boues rouges utilisée pour l'extraction de l'alumine.

**Revendications**

1. Procédé de traitement de cendres volantes d'incinération d'ordures ménagères, à l'exclusion des cendres volantes de charbon, en vue d'obtenir des composition solides de résistance à la compression atteignant 7 MPa, pratiquement insolubles dans l'eau et non polluantes, caractérisé en ce que les cendres sont mélangées à de petites quantités d'eau comprises entre 10 % et 35 % de leur poids et à de petites quantités de chaux de façon à amener le pH du produit obtenu à une valeur comprise entre 7,4 et 11,6, ledit produit obtenu étant ensuite compacté ou extrudé

2. Procédé selon la revendication 1, caractérisé en ce qu'une partie de l'eau est fournie par aspersion, l'autre partie étant ajoutée lors du mélange ou malaxage des cendres.

3. Procédé selon l'une quelconque des revendications 1 ou 2, caractérisé en ce que l'eau utilisée provient de sources choisies dans le groupe ; eau de surface ou souterraine ; eau résiduaire ; boue de station d'épuration des eaux ; lessivat de décharge.

4. Procédé selon l'une des revendications 1, 2, ou 3, caractérisé en ce que la quantité de chaux est de 0,05 à 2 parties pour 100 parties (poids) de CV.

5. Procédé selon l'une des revendications précédentes, caractérisé en ce que la chaux est associée à un produit renfermant de la silice et/ou de l'alumine.

6. Procédé selon la revendication 4, caractérisé en ce que les sources de chaux, de silice et d'alumine sont choisies parmi des produits considérés comme des déchets tels que ceux issus des fabrications d'acétylène, de ferrosiliciums ; les boues rouges ; des déchets d'épuraton de fumées ; et analogues.

**Claims**

1. Process for treating loose ash from household refuse incineration, excluding loose coal ash, with a view to obtaining solid compositions resistant to a compression of up to 7 MPa, virtually insoluble in water and non-pollutant, characterised in that the ash is mixed with small quantities of water comprised between 10% and 35% of its weight and with small quantities of lime so as the bring the pH of the

4

product obtained to a value of between 7.4 and 11.6, said obtained product then being compacted or extruded.

2. Process according to claim 1, characterised in that a part of the water is provided by sprinkling and the other part is added at the time of mixing or malaxation of the ash.

3. Process according to any one of claims 1 or 2, characterised in that the water used comes from sources selected from the group; surface or underground water; waste water; mud from water-purifying stations; discharged leachates.

4. Process according to one of claims 1, 2 or 3, characterised in that the quantitiy of lime is from 0.05 to 2 parts per 100 parts (weight) of the ash.

5. Process according to one of the preceding claims, charaterised in that the lime is associated with a product including silica and/or aluminium.

6. Process according to claim 4, characterised in that the lime, silica and aluminium sources are selected from amongst products considered as waste, such as those from the manufacture of acetylene or ferrosilicon; red muds; smoke-purifying waste; and the like.

**Patentansprüche**

1. Verfahren zur Behandlung von Flugasche aus der Verbrennung von Haushaltsabfällen, mit Ausschluß von Flugasche aus Kohle, im Hinblick auf den Erhalt einer festen Zusammensetzung, die eine Festigkeit gegen Drücke aufweist, die den Wert 7 MPa erreicht, die praktisch in Wasser unlöslich und die umweltfreundlich ist, dadurch gekennzeichnet, daß der Asche eine kleine Menge Wasser, die zwischen 10 % und 35 % ihres Gewichts liegt, und eine kleine Menge Kalk zugesetzt wird, so daß der erhaltene pH-Wert zwischen 7,4 und 11,6 liegt, und daß die so erhaltene Zusammensetzung anschließend verdichtet oder extrudiert wird.

2. Verfahren nach Anspruch 1, dadurch gekennzeichnet, daß ein Teil des Wassers durch einen Sprühvorgang zugeführt wird und daß der andere Teil während des Misch- oder Knetvorgangs der Asche zugefügt wird.

3. Verfahren nach einem der Ansprüche 1 oder 2, dadurch gekennzeichnet, daß das verwendete Wasser aus der Gruppe der folgenden Wasserquellen stammt: Oberflächen- oder Grundwasser; Abwasser; Schlamm aus der Wasseraufbereitungsanlage; Waschwasser.

4. Verfahren nach einem der Ansprüche 1, 2 oder 3, dadurch gekennzeichnet, daß die Kalkmenge zwischen 0,05 und 2 Teilen auf 100 (Gewichts-)Teilen Flugasche liegt.

5. Verfahren nach einem der vorhergehenden Ansprüche, dadurch gekennzeichnet, daß der Kalk Bestandteil einer Zusammensetzung ist, welche Siliziumoxid und/oder Aluminiumoxid aufweist.

6. Verfahren nach Anspruch 4, dadurch gekennzeichnet, daß als Quellen für Kalk, Siliziumoxid und Aluminiumoxid solche ausgewählt werden, deren Bestandteile als Abfall angesehen werden, wie sie bei der Herstellung von Acethylen, Ferrosilizium, Rotschlamm, Rauchgasreinigung und dgl. anfallen.